# EUROPEAN PATENT APPLICATION

(11) **EP 3 023 273 A2**
(43) Date of publication of application: **25.05.2016**
(21) Application number: 15164202.2
(22) Date of filing: 20.04.2015
(51) Int. Cl.: B60H 1/00

(54) **AIR INTAKE APPARATUS OF HVAC SYSTEM FOR VEHICLE**

(30) Priority: 21.11.2014 KR 20140163732
(71) Applicant: Hyundai Motor Company, Seoul 137-938 (KR); Doowon Climate Control Co., Ltd., Chungcheongnam-do 336-860 (KR)
(72) Inventor: Kim, Yong Chul, 445-703 Gyeonggi-do (KR); An, Byung Guk, 336-736 Chungcheongnam-do (KR)
(74) Representative: Hoffmann Eitle

(57) **Abstract**

An air introducing intake of an HVAC system for a vehicle includes an intake case 100 having a first outdoor air introducing hole 110 and a second outdoor air introducing hole 120 formed thereon and a partition part 150 partitioning an inner space into a plurality of spaces 160,170. A first indoor and outdoor air door 300 rotates by a first rotation shaft 310 and selectively opens or closes a first indoor air introducing hole 130 and the first outdoor air introducing hole 110. A second indoor and outdoor air door 500 rotates by a second rotation shaft 510 and selectively opens or closes a second indoor air introducing hole 140 and the second outdoor air introducing hole 120. An actuator operates the first indoor and outdoor air door and the second indoor and outdoor air door by rotating the first rotation shaft and the second rotation shaft.

## Description

### TECHNICAL FIELD

The present disclosure relates to an air intake apparatus of a heating, ventilation, and air conditioning (HVAC) system for a vehicle capable of allowing indoor and outdoor air to be introduced into the HVAC system.

### BACKGROUND

A vehicle is provided with an HVAC system in order to provide a pleasant environment to passengers. The HVAC system adjusts outdoor and indoor air by intake the outdoor air or circulating the indoor air through an indoor and outdoor air door of the HVAC system.

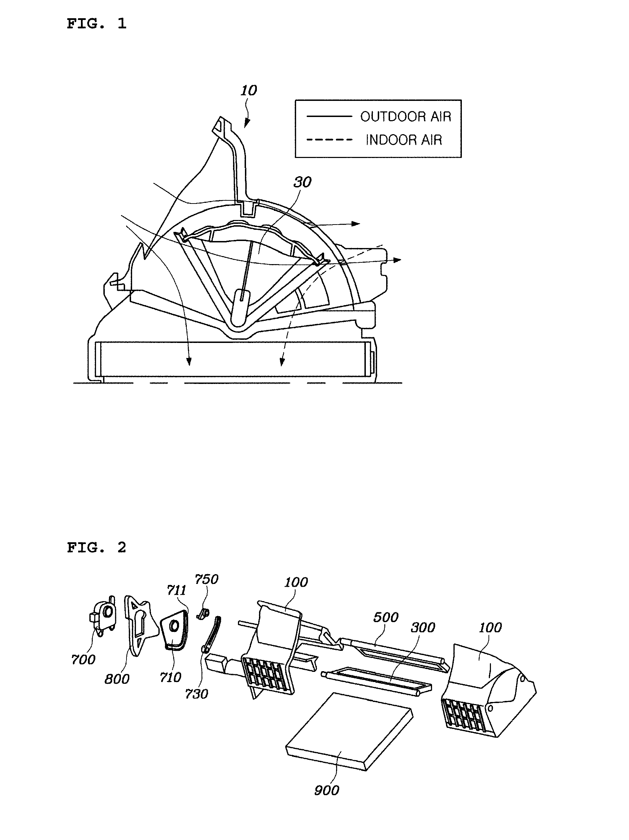

FIG. 1 is a view showing an air intake apparatus of an HVAC system for a vehicle according to the related art. Indoor air and outdoor air are properly mixed by an indoor and outdoor door 30 installed in an intake case 10 of the HVAC system so as to be introduced into the HVAC system. However, the outdoor air, which is bypassed from outside at the time of the mixing of the indoor air and the outdoor air, flows backward and enters an interior of the vehicle.

Particularly, for an electric vehicle, an air volume of the indoor air is set so as to partially introduce the indoor air. When the vehicle runs at a high speed, the outdoor air which is bypassed to the indoor flows backwards, thus providing cold air to the passenger and causing the passenger discomfort.

In addition, the indoor air should be maximally used to increase the mileage of the electric vehicle. However, the introduced amount of indoor air needs to be limited due to a side-effect.

Further, in the air introducing apparatus according to the related art, it is difficult to maintain the introduced amount of indoor air and outdoor air by controlling the indoor and outdoor air door at the time of mixing the indoor air and the outdoor air.

Therefore, there is a need for an air intake apparatus of an HVAC system for a vehicle capable of properly controlling the indoor air and the outdoor air if necessary while the outdoor air does not flow backward to an interior of the vehicle when driving at high speed.

The matters described as the related art have been provided only for assisting in the understanding for the background of the present disclosure and should not be considered as corresponding to the related art known to those skilled in the art.

### SUMMARY

An aspect of the present inventive concept provides an air intake apparatus of an HVAC system for a vehicle capable of properly controlling indoor air and outdoor air if necessary while the outdoor air does not flow backward to an interior of the vehicle when the vehicle is being driven at high speed.

According to an exemplary embodiment of the present invention, an air intake apparatus of an HVAC system for a vehicle includes an intake case having a first outdoor air introducing hole and a second outdoor air introducing hole thereon and a partition part partitioning an inner space into a plurality of spaces. A first indoor and outdoor air door rotates by a first rotation shaft and selectively opens or closes a first indoor air introducing hole and the first outdoor air introducing hole which are formed at a front side of the intake case. A second indoor and outdoor air door rotates by a second rotation shaft and selectively opens or closes a second indoor air introducing hole and the second outdoor air introducing hole which are formed at a rear side of the intake case. An actuator operates the first indoor and outdoor air door and the second indoor and outdoor air door by rotating the first rotation shaft and the second rotation shaft.

The actuator may comprise a cam having a plate shape and a guide groove formed in an inner side of the actuator.

The first indoor and outdoor air door has a first lever, and the second indoor and outdoor air door has a second lever. Thus, the first lever and the second lever may rotate along the guide groove of the cam according to rotation of the cam to open or close the first indoor and outdoor air door and the second indoor and outdoor air door.

The cam may link the first indoor and outdoor air door and the second indoor and outdoor air door with each other so that the second indoor and outdoor air door is simultaneously controlled as the first indoor and outdoor air door is controlled.

The actuator may perform a multi-stage control to open or close the first indoor and outdoor air door and the second indoor and outdoor air door at a predetermined angle.

The partition part is disposed between the first outdoor air introducing hole and the second outdoor air introducing hole, such that a first space in which the first indoor and outdoor air door rotate and a second space in which the second indoor and outdoor air door rotate may be formed.

The partition part may be disposed between the first outdoor air introducing hole and the second outdoor air introducing hole to separate air flowing through the first indoor and outdoor air door and air flowing through the second indoor and outdoor air door into the HVAC system to separate the air entering through the first indoor and outdoor air door and the air entering through the second indoor and outdoor air door each other.

The partition part may have a "Y" shape.

### BRIEF DESCRIPTION OF THE DRAWINGS

FIG. 1 is a view showing an air intake apparatus of an HVAC system for vehicle according to the related art.
FIG. 2 is an exploded view of an air intake apparatus of an HVAC system for vehicle according to an exemplary embodiment of the present inventive concept.
FIGS. 3 to 8 show control operation at different angles of FIG. 2.

### DETAILED DESCRIPTION

Hereinafter, an air intake apparatus of an HVAC system for a vehicle according to exemplary embodiments of the present inventive concept will be described with reference to the accompanying drawings.

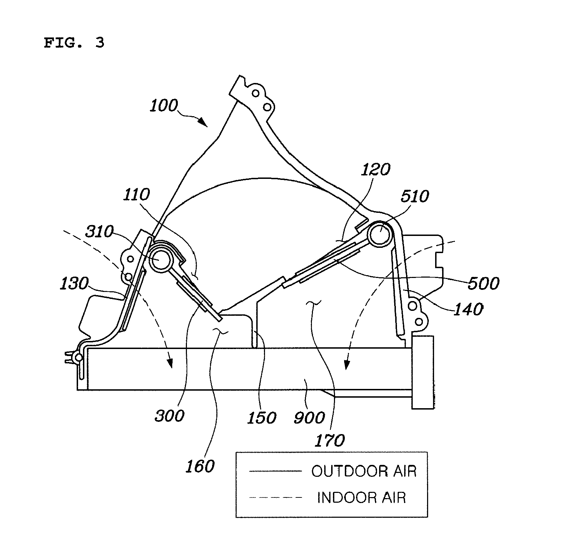

FIG. 2 is an exploded view of an air intake apparatus of an HVAC system for a vehicle according to an exemplary embodiment of the present inventive concept, and FIGS. 3 to 8 show control operation at different angles of FIG. 2.

An air intake apparatus of an HVAC system for a vehicle according to an exemplary embodiment of the present inventive concept includes an intake case 100 having a first outdoor air introducing hole 110 and a second outdoor air introducing hole 120 formed thereon and a partition part 150 partitioning an inner space into a plurality of spaces is formed. A first indoor and outdoor air door 300 rotates by a first rotation shaft 310 and selectively opens or closes a first indoor air introducing hole 130 and the first outdoor air introducing hole 110 which are formed at a front side of the intake case 100. A second indoor and outdoor air door 500 rotate by a second rotation shaft 510 and selectively opens or closes a second indoor air introducing hole 140 and the second outdoor air introducing hole 120 which are formed at a rear side of the intake case 100. An actuator 700 operates the first indoor and outdoor air door 300 and the second indoor and outdoor air door 500 by rotating the first rotation shaft 310 and the second rotation shaft 510.

The intake case 100 capable of introducing indoor air and outdoor air is disposed at an upper side of the HVAC system. The first outdoor air introducing hole 110 and the second outdoor air introducing hole 120 are each formed on an upper side of the intake case 100. The first indoor air introducing hole 130 is formed at a front side of the vehicle, and the second indoor air introducing hole 140 is formed at a rear side of the vehicle.

The partition part 150 is provided between the first outdoor air introducing hole 110 and the second outdoor air introducing hole 120. Therefore, a first space 160 in which the first indoor and outdoor air door 300 rotate and a second space 170 in which the second indoor and outdoor air door 500 rotate may be formed. The flow paths of air into the interior of the air intake apparatus through the first indoor and outdoor air door 300 and the second indoor and outdoor air door 500 are separated so that air introduced into the respective indoor and outdoor air doors is not mixed with each other. The partition part 150 may have a "Y' shape.

The first rotation shaft 310 and the second rotation shaft 510 rotate by the actuator 700, such that the first indoor and outdoor air door 300 and the second indoor and outdoor air door 500 are open or closed. The actuator 700 is coupled to a side surface of the intake case 100 by a bracket 800. A cam 710, which has a plate shape, comprises a guide groove 711 formed in an inner side thereof between the bracket 800 and the intake case 100.

The first indoor and outdoor air door 300 includes a first lever 730, and the second indoor and outdoor air door 500 has a second lever 750. Thus, the first lever 730 and the second lever 750 rotate along the guide groove 711 according to the rotation of the cam 710 to open or close the first indoor and outdoor air door 300 and the second indoor and outdoor air door 500, thereby properly mixing the outdoor air and the indoor air and introducing the mixed air into the interior of the vehicle through the HVAC system.

Particularly, the cam 710 may link the first indoor and outdoor air door 300 and the second indoor and outdoor air door 500 with each other so that the second indoor and outdoor air door 500 is simultaneously controlled at the time of controlling the first indoor and outdoor air door 300. The actuator 700 may perform a multi-stage control to open or close the first indoor and outdoor air door 300 and the second indoor and outdoor air door 500 at a predetermined angle.

According to the present disclosure, the outdoor air is prevented from introducing into the interior of the vehicle at the time of the driving of the vehicle at high speed, and the amount of outdoor air and indoor air is properly adjusted by controlling the first indoor and outdoor air door 300 and the second indoor and outdoor air door 500 using one actuator 700 and one cam 710.

A mixed amount of indoor air and outdoor air of the air intake apparatus of the HVAC system for a vehicle according to the present disclosure will be described with reference to FIGS. 3 to 8. FIG. 3 shows a case in which the outdoor air is set to 0%, and the indoor air is set to 100%. Here, the first indoor and outdoor air door 300 closes the first outdoor air introducing hole 110, and the second indoor and outdoor air door 500 closes the second outdoor air introducing hole 120, and thus, only the indoor air of 100% is introduced through the first indoor air introducing hole 130 and the second indoor air introducing hole 140.

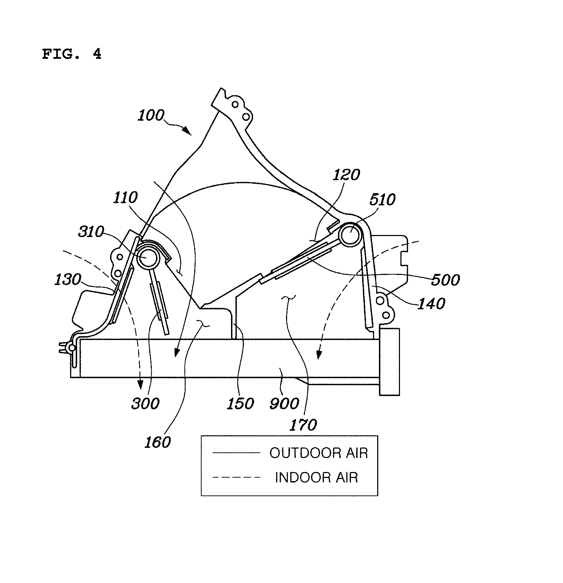

FIG. 4 shows a case in which the outdoor air is set to 20%, and the indoor air is set to 80%. Here, the first outdoor air introducing hole 110 and the first indoor air introducing hole 130 are open by opening the first indoor and outdoor air door 300 at a predetermined angle, and the second indoor and outdoor air door 500 closes the second outdoor air introducing hole 120. The indoor air is introduced through the first indoor air introducing hole 130 and the second indoor air introducing hole 140, and the outdoor air is introduced through the first outdoor air introducing hole 110.

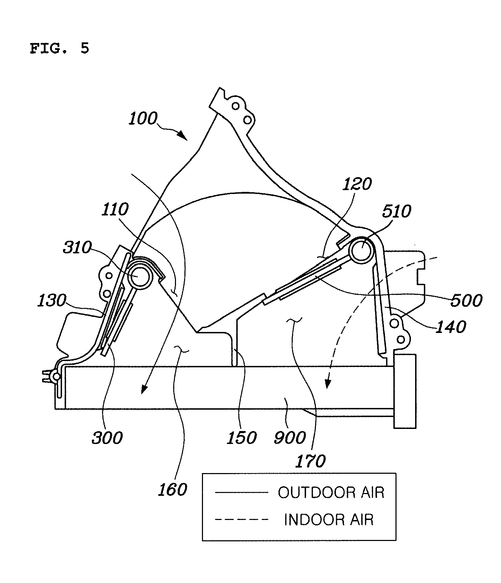

FIG. 5 shows a case in which the outdoor air is set to 40%, and the indoor air is set to 60%. Here, the first outdoor air introducing hole 110 is open by closing the first indoor air introducing hole 130 by the first indoor and outdoor air door 300, and the second indoor and outdoor air door 500 closes the second outdoor air introducing hole 120. The outdoor air is introduced through the first outdoor air introducing hole 110, and the indoor air is introduced through the second indoor air introducing hole 140.

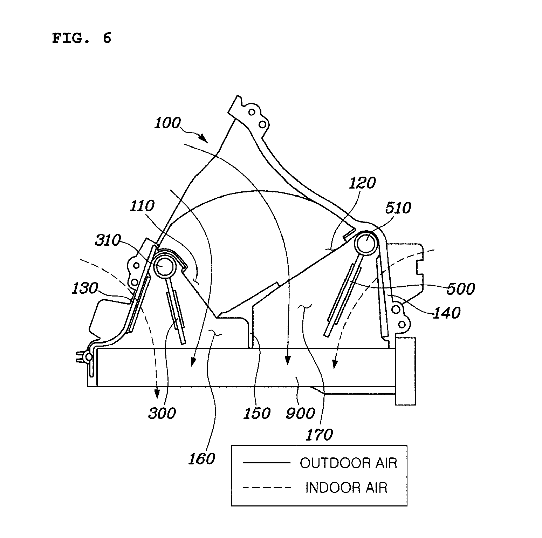

FIG. 6 shows a case in which the outdoor air is set to 60%, and the indoor air is set to 40%. The first outdoor air introducing hole 110 and the first indoor air introducing hole 130 are open by opening the first indoor and outdoor air door 300 at a predetermined angle, and the second outdoor air introducing hole 120 and the second indoor air introducing hole 140 are open by opening the second indoor and outdoor air door 500 at a predetermined angle, such that the indoor air and the outdoor air are introduced through all the first outdoor air introducing hole 110, the second outdoor air introducing hole 120, the first indoor air introducing hole 130, and the second indoor air introducing hole 140.

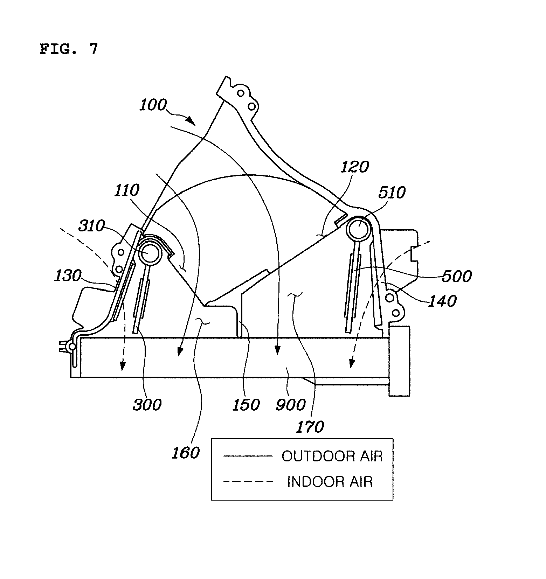

FIG. 7 shows a case in which the outdoor air is set to 80%, and the indoor air is set to 20%. Here, more outdoor air is introduced than the indoor air by opening the first indoor and outdoor air door 300 and the second indoor and outdoor air door 500 at a predetermined angle as shown in FIG. 6, and opening the first indoor and outdoor air door 300 and the second indoor and outdoor air door 500 so as to more close indoor air introducing hole sides, respectively than that shown in FIG. 6.

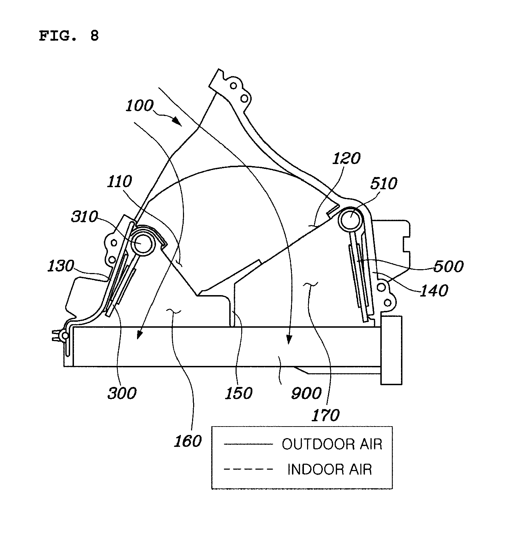

FIG. 8 shows a case in which the outdoor air is set to 100%, and the indoor air is set to 0%. Here, the first indoor and outdoor air door 300 closes the first indoor air introducing hole 130, and the second indoor and outdoor air door 500 closes the second indoor air introducing hole 140, and thus, only the outdoor air is introduced through the first outdoor air introducing hole 110 and the second outdoor air introducing hole 120.

Therefore, the air introduced through the first and second indoor and outdoor air introducing holes as mentioned above passes through a filter 900. Then the air is introduced into the HVAC system by a blower (not shown) positioned below the filter 900, subjected to a proper heat absorption and heating, and then supplied to the indoor.

According to the air intake apparatus of the HVAC system for a vehicle having the above-mentioned structure, the first indoor and outdoor air door and the second indoor and outdoor air door may be controlled using one actuator and one cam. The control of the cam is performed in three modes as shown in FIGS. 3 to 8, such that the indoor and outdoor air door is controlled even in an indoor air mode, whereby it is possible to prevent the outdoor air from flowing backward to the interior of the vehicle by the high speed, and it is possible to provide a pleasant environment to the passengers by properly ventilating the interior of the vehicle.

Further, since the partition part is provided to remove a bypassed section at the time of mixing of the indoor and the outdoor air, a back flow of the outdoor air may be prevented and noise may be reduced. In addition, the first indoor and outdoor air door and the second indoor and outdoor air door are controlled at a predetermined angle at the time of mixing of the indoor air and the outdoor air, such that the introduced amount of outdoor air may be controlled from 0% to 100%.

Therefore, it is possible to block cold outdoor air from being directly introduced into the indoor of the vehicle even at a trajectory of the indoor and outdoor air door that maintains any mixed ratio of the indoor air and the outdoor air. Two indoor air doors are installed at front and rear of the vehicle, so that more indoor air is introduced into the indoor as compared to the related art, thereby maximizing indoor thermal insulation.

In addition, a partial outdoor air control ratio during the introduction of the indoor air is increased, such that a portion in which the indoor air of 100% is changed into the outdoor air at the time of the driving of the vehicle at high speed according to the related art may be decreased, and an indoor air mixed section may be increased, thereby minimizing ventilation loss. Therefore, in an electric vehicle, the mileage may be maximally increased, and in a conventional gasoline engine vehicle, initial cooling and heating performance may be increased and fuel efficiency may be improved.

Although the present inventive concept is shown and described in connection with the exemplary embodiments, it is apparent to those skilled in the art that the modifications and variations can be made without departing from the spirit and scope of the invention as defined by the appended claims.

## Claims

1. An air intake apparatus of a heating, ventilation, and air conditioning (HVAC) system for a vehicle, the apparatus comprising:
an intake case having a first outdoor air introducing hole and a second outdoor air introducing hole thereon and a partition part partitioning an inner space of the intake case into a plurality of spaces;
a first indoor and outdoor air door rotating by a first rotation shaft and selectively opening or closing a first indoor air introducing hole and the first outdoor air introducing hole which are formed at a front side of the intake case;
a second indoor and outdoor air door rotating by a second rotation shaft and selectively opening or closing a second indoor air introducing hole and the second outdoor air introducing hole which are formed at a rear side of the intake case; and
an actuator operating the first indoor and outdoor air door and the second indoor and outdoor air door by rotating the first rotation shaft and the second rotation shaft.

2. The air intake apparatus of claim 1, wherein the actuator comprises a cam having a plate shape and a guide groove formed in an inner side of the cam.

3. The air intake apparatus of claim 2, wherein the first indoor and outdoor air door has a first lever and the second indoor and outdoor air door has a second lever, such that the first lever and the second lever rotate along the guide groove of the cam according to rotation of the cam to open or close the first indoor and outdoor air door and the second indoor and outdoor air door.

4. The air intake apparatus of claim 2 or 3, wherein the cam links the first indoor and outdoor air door and the second indoor and outdoor air door with each other so that the second indoor and outdoor air door is simultaneously controlled when the first indoor and outdoor air door is controlled.

5. The air intake apparatus of any one of the preceding claims, wherein the actuator performs a multi-stage control to open or close the first indoor and outdoor air door and the second indoor and outdoor air door at a predetermined angle.

6. The air intake apparatus of any one of the preceding claims, wherein the partition part is disposed between the first outdoor air introducing hole and the second outdoor air introducing hole, such that a first space in which the first indoor and outdoor air door rotates and a second space in which the second indoor and outdoor air door rotates are formed.

7. The air intake apparatus of any one of the preceding claims, wherein the partition part is disposed between the first outdoor air introducing hole and the second outdoor air introducing hole to separate air flowing through the first indoor and outdoor air door and air flowing through the second indoor and outdoor air door into the HVAC system to separate the air entering through the first indoor and outdoor air door and the air entering through the second indoor and outdoor air door from each other.

8. The air intake apparatus of any one of the preceding claims, wherein the partition part has a "Y" shape.

9. The air intake apparatus of any one of the preceding claims, further comprising a filter through which air introduced through the first indoor and outdoor introducing hole and air introduced through the second indoor and outdoor introducing hole pass and enter the HVAC system.
